# EUROPÄISCHE PATENTSCHRIFT

(11) **EP 2 952 060 B1**
(45) Veröffentlichungstag und Bekanntmachung des Hinweises auf die Patenterteilung: **13.11.2019**
(21) Anmeldenummer: 13811533.2
(22) Anmeldetag: 19.12.2013
(51) Int. Cl.: H05B 33/08

(54) **SCHALTUNGSANORDNUNG UND VERFAHREN ZUM BETREIBEN UND DIMMEN MINDESTENS EINER LED**
CIRCUIT CONFIGURATION AND METHOD FOR OPERATING AND DIMMING OF AT LEAST ONE LED
CIRCUIT ÉLECTRIQUE ET PROCÉDÉ POUR FAIRE FONCTIONNER ET VARIER AU MOINS UNE LED

(30) Priorität: 29.01.2013 DE 102013201438
(43) Veröffentlichungstag der Anmeldung: 09.12.2015
(73) Patentinhaber: OSRAM GmbH, 80807 München (DE)
(72) Erfinder: KRUMMEL, Peter, 83301 Traunreut (DE)
(86) Internationale Anmeldenummer: PCT/EP2013/077474
(87) Internationale Veröffentlichungsnummer: WO 2014/117905

(56) Entgegenhaltungen:
- DE-A1- 19 848 925
- DE-A1-102005 058 484
- US-A1- 2003 122 502
- US-A1- 2007 242 015
- US-A1- 2010 079 085
- US-A1- 2012 181 940

## Beschreibung

### Technisches Gebiet

Die vorliegende Erfindung betrifft eine Schaltungsanordnung zum Betreiben und Dimmen mindestens einer LED umfassend einen Eingang mit einem ersten und einem zweiten Eingangsanschluss zum Koppeln mit einer Versorgungsgleichspannung, zumindest einen ersten und einen zweiten elektronischen Schalter in Brückenanordnung, wobei der erste und der zweite elektronische Schalter unter Ausbildung eines Brückenmittelpunkts seriell zwischen den ersten und den zweiten Eingangsanschluss gekoppelt sind, einen Ausgang mit einem ersten und einem zweiten Ausgangsanschluss zum Anschließen der mindestens einen LED, eine Drossel, einen Gleichrichter mit einem Gleichrichtereingang und einem Gleichrichterausgang, wobei die Drossel zwischen den Brückenmittelpunkt und den Gleichrichtereingang gekoppelt ist, wobei der Gleichrichterausgang mit dem Ausgang der Schaltungsanordnung gekoppelt ist, und eine Ansteuervorrichtung mit mindestens einem ersten und einem zweiten Ausgang zur Zuführung von Ansteuersignalen an den ersten und den zweiten elektronischen Schalter, wobei die Ansteuersignale eine vorgebbare Frequenz aufweisen, wobei die Ansteuervorrichtung einen Eingang zum Zuführen einer Dimminformation aufweist, wobei die Ansteuervorrichtung ausgelegt ist, zum Dimmen der mindestens einen LED bei zunehmender Dimmung die Frequenz der Ansteuersignale zu erhöhen. Sie betrifft überdies ein entsprechendes Verfahren zum Betreiben und Dimmen mindestens einer LED.

### Stand der Technik

Die vorliegende Erfindung betrifft die Problematik, dass LEDs auf einfache Weise kostengünstig betrieben und gedimmt werden sollen, ohne dass dabei hörbare oder sichtbare Beeinträchtigungen entstehen, beispielsweise ein Brummen oder Flickererscheinungen. Eine gattungsgemäße Schaltungsanordnung zum Betreiben mindestens einer LED sowie ein Verfahren zu deren Betrieb offenbart die DE 10 2005 058 484 A1.

Es ist bekannt, LEDs durch Pulsweitenmodulation zu dimmen. Für die Pulsweitenmodulation werden Frequenzen von wenigen 100 Hz verwendet. Diese werden vom menschlichen Auge zwar nicht bewusst wahrgenommen, können aber zu stroboskopischen und damit störenden Effekten führen. Überdies liegen die niedrigen Frequenzen im menschlichen Hörbereich und können damit zu unerwünschten Geräuschbelästigungen führen.

Eine Schaltungsanordnung mit einer nachgeschalteten Pulsweitenmodulation zur weiteren Dimmung von LEDs offenbart die US 2012 / 0181940 A1. Hier wird während eines ersten Dimmbereiches die Konverterfrequenz erhöht um den Strom durch die LEDs zu erniedrigen, und in einem zweiten Bereich wird diese Dimmung mit einer überlagerten PWM Dimmung kombiniert.

### Darstellung der Erfindung

Die Aufgabe der vorliegenden Erfindung besteht deshalb darin, eine gattungsgemäße Schaltungsanordnung bzw. ein eingangs genanntes Verfahren derart weiterzubilden, dass das Betreiben und Dimmen von LEDs bei weitgehend reduzierten sichtbaren bzw. hörbaren Störungen ermöglicht wird.

Diese Aufgabe wird gelöst durch eine Schaltungsanordnung mit den Merkmalen von Patentanspruch 1 sowie durch ein Verfahren mit den Merkmalen von Patentanspruch 10.

Die vorliegende Erfindung basiert auf der Erkenntnis, dass bei einer gattungsgemäßen Schaltungsanordnung durch Frequenzerhöhung zwar eine Dimmung erzielt werden kann, jedoch treten bei zunehmender Dimmung ab einem bestimmten Schwellwert Verschiebungen des Farborts auf, die wiederum vom menschlichen Auge wahrgenommen werden können und damit zu unerwünschten sichtbaren Störungen führen.

Die Erfindung geht deshalb den Weg, zum Dimmen der mindestens einen LED die Frequenz der Ansteuersignale mit zunehmender Dimmung lediglich bis zu einem vorgebbaren Dimmschwellwert zu erhöhen. Soll weitergedimmt werden, d. h., dass noch weniger Licht emittiert werden soll, wird erfindungsgemäß auf eine andere Vorgehensweise umgeschaltet: Zu diesem Zweck umfasst die Schaltungsanordnung weiterhin eine Kurzschlussvorrichtung mit mindestens einem Eingang und mindestens einem Ausgang, wobei der mindestens eine Eingang der Kurzschlussvorrichtung mit mindestens einem Ausgang der Ansteuervorrichtung gekoppelt ist, wobei der mindestens eine Ausgang der Kurzschlussvorrichtung mit dem Gleichrichtereingang gekoppelt ist, wobei die Ansteuervorrichtung weiterhin ausgelegt ist, zur Einstellung eines Dimmwerts, der unter dem vorgebbaren Dimmschwellwert liegt, die Kurzschlussvorrichtung während vorgebbarer Zeiträume zu aktivieren. In der Nomenklatur der vorliegenden Anmeldung bezeichnet eine zunehmende Dimmung einen abnehmenden Dimmwert und damit eine Abnahme des emittierten Lichts.

Während die Dimmung mittels PWM zu hörbaren und sichtbaren Beeinträchtigungen führt, die durch das niederfrequente periodische Ein- und Ausschalten des Stromes in einer Drossel entstehen können, werden diese bei Dimmung durch Frequenzerhöhung weitgehend vermieden. Bei Dimmung durch Frequenzerhöhung wird die Stromhöhe reduziert, ohne dass der Stromfluss in der Drossel unterbrochen wird. Daher treten keine Geräusche und stroboskopischen Effekte auf. Wird allerdings eine bestimmte Stromhöhe unterschritten, wird der Farbort des von der LED abgegebenen Lichts verändert, was wiederum zu sichtbaren Beeinträchtigungen führt. Wie praktische Untersuchungen gezeigt haben, verschiebt sich bei LEDs der Farbort, wenn der Strom kleiner als 20 bis 30% des Nennstroms wird. Die Frequenz des Stroms spielt hingegen keine Rolle.

Eine gattungsgemäße Schaltungsanordnung ist prinzipiell bekannt aus elektronischen Vorschaltgeräten für Leuchtstofflampen, insbesondere Niederdruckleuchtstofflampen. Zum Dimmen wird im oberen Dimmbereich, das heißt von ca. 100 % bis runter zu 20 bis 30 % Licht, die Frequenz erhöht und damit der LED-Strom reduziert. Die Frequenzen liegen typischerweise oberhalb von 40 kHz und sind deshalb nicht hörbar. Zum Dimmen wird die Frequenz der Brückenanordnung angehoben. Durch die Frequenzerhöhung wird der den LEDs zugeführte Strom reduziert und damit das emittierte Licht reduziert. Um die Farbwiedergabe einer LED nicht negativ zu beeinflussen, sollte jedoch vermieden werden, durch weitere Reduzierung der LED-Stromhöhe mittels Frequenzerhöhung tiefer als 20 bis 30 % zu dimmen.

Erfindungsgemäß wird demnach die Brückenfrequenz zum Dimmen auf Werte unter 20 bis 30 % konstant auf dem hohen Niveau des Dimmschwellwerts gehalten, der erforderlich ist, um den LED-Strom auf 20 bis 30 % einzustellen. Die Frequenz der Brückenanordnung liegt in diesem Fall bei ca. 150 bis 200 kHz und damit deutlich über dem hörbaren Bereich. Der Lichtstrom der LEDs wird nunmehr weiter reduziert durch ein hochfrequentes Ausblenden einzelner der hochfrequenten Stromhalbwellen. Die Frequenz zum Ausblenden ist größer als 20 kHz gewählt und liegt damit über dem hörbaren Bereich, ist jedoch deutlich kleiner als die Brückenfrequenz. Durch diese Vorgehensweise bleibt die LED-Peak-Stromhöhe konstant, weshalb die Farbwiedergabe nicht beeinflusst wird. Unterschiedliche Dimmgrade können eingestellt werden durch Ausschneiden einzelner bis mehrerer Halbwellen pro Zeiteinheit. Durch diese Vorgehensweise kann bis auf 0 % Licht gedimmt werden. Alle Frequenzen liegen oberhalb der für den Menschen hörbaren Frequenz. Abstufungen des gedimmten Lichts können dadurch erreicht werden, dass zwischen einzelnen Zyklen die Anzahl der ausgeschnittenen Stromhalbwellen nach einem vorgebbaren Schema variiert wird.

Erfindungsgemäß stellt die Frequenz der Ansteuersignale zur Einstellung eines Dimmwerts, der dem Dimmschwellwert entspricht, einen Frequenzmaximalwert dar. Auf diese Weise werden akustische und sichtbare Beeinträchtigungen zuverlässig ausgeschlossen. Die Ansteuervorrichtung ist bevorzugt weiterhin ausgelegt, zur Einstellung eines Dimmwerts, der unter dem vorgebbaren Dimmschwellwert liegt, die Frequenzansteuersignale auf den Frequenzmaximalwert einzustellen. Damit werden Dimmwerte bis 0 % ohne akustische oder sichtbare Beeinträchtigungen ermöglicht.

Die Kurzschlussvorrichtung umfasst bevorzugt mindestens eine Serienschaltung eines elektronischen Schalters und mindestens einer Diode, wobei der Eingang des elektroni schen Schalters mit dem weiteren Ausgang der Ansteuervorrichtung gekoppelt ist, wobei die Serienschaltung zwischen den Ausgang der Kurzschlussvorrichtung und ein Bezugspotential gekoppelt ist. Auf diese Weise kann mittels der Ansteuervorrichtung die Kurzschlussvorrichtung in geeigneter Weise zum Ausblenden vorgebbarer Halbwellen des Brückenstroms angesteuert werden.

Gemäß einer ersten Variante umfasst die Kurzschlussvorrichtung eine erste Serienschaltung umfassend einen ersten elektronischen Schalter und eine erste Diode sowie eine zweite Serienschaltung umfassend einen zweiten elektronischen Schalter und eine zweite Diode, wobei die erste und die zweite Serienschaltung parallel geschaltet sind, wobei die erste Diode und die zweite Diode mit unterschiedlicher Orientierung angeordnet sind. Auf diese Weise wird es ermöglicht, mittels einer der Serienschaltungen positive Halbwellen kurzzuschließen und mittels der anderen Serienschaltung negative Halbwellen.

Bei einer anderen Variante kommt die Kurzschlussvorrichtung mit lediglich einem elektronischen Schalter aus. Sie umfasst dafür eine erste, eine zweite, eine dritte und eine vierte Diode. Die erste und die zweite Diode sind unter Ausbildung eines ersten Kopplungspunkts mit zueinander orientierten Kathoden in Serie zwischen den Ausgang der Kurzschlussvorrichtung und das Bezugspotential gekoppelt, während die dritte und die vierte Diode unter Ausbildung eines zweiten Kopplungspunkts mit zueinander orientierten Anoden in Serie zwischen den Ausgang der Kurzschlussvorrichtung und das Bezugspotential gekoppelt sind. Die Arbeitselektrode des elektronischen Schalters ist mit dem ersten Kopplungspunkt und die Bezugselektrode des elektronischen Schalters mit dem zweiten Kopplungspunkt gekoppelt. Durch die geschickte Anordnung der Dioden wird es ermöglicht, sowohl positive als auch negative Halbwellen unter Verwendung ein und desselben elektronischen Schalters kurzzuschließen.

Zwischen die Drossel und den Gleichrichter kann ein Transformator gekoppelt sein, um eine galvanische Trennung zwischen dem Eingang und dem Ausgang der Schaltungsanordnung bereitzustellen.

Bei einer bevorzugten Ausführungsform umfasst die Schaltungsanordnung eine Strommessvorrichtung, insbesondere einen Shunt-Widerstand, die ausgelegt ist, einen Strom zu messen, der mit dem Strom durch die mindestens eine LED korreliert ist, wobei die Strommessvorrichtung zur Regelung des Stroms durch die mindestens eine LED mit der Ansteuervorrichtung gekoppelt ist. Auf diese Weise kann zuverlässig auf einen vorgebbaren Dimmwert geregelt werden.

Bevorzugt umfasst die Schaltungsanordnung weiterhin einen Zwischenkreiskondensator, der zwischen den ersten und den zweiten Eingangsanschluss gekoppelt ist. Die Schaltungsanordnung kann weiterhin einen Brückenkondensator umfassen, der zwischen die Drossel und den Gleichrichter gekoppelt ist. Schließlich kann ein Resonanzkondensator vorgesehen sein, der zwischen den nicht mit dem Brückenmittelpunkt gekoppelten Anschluss der Drossel und das Bezugpotential gekoppelt ist.

Weitere bevorzugte Ausführungsformen ergeben sich aus den Unteransprüchen.

Die mit Bezug auf die erfindungsgemäße Schaltungsanordnung vorgestellten bevorzugten Ausführungsformen und deren Vorteile gelten entsprechend, soweit anwendbar, für das erfindungsgemäße Verfahren. **Kurze Beschreibung der Zeichnung(en)**

Im Nachfolgenden werden nunmehr Ausführungsbeispiele der vorliegenden Erfindung unter Bezugnahme auf die beigefügten Zeichnungen näher beschrieben. Es zeigen:
- Fig. 1: in schematischer Darstellung ein erstes Ausführungsbeispiel einer erfindungsgemäßen Schaltungsanordnung;
- Fig. 2: in schematischer Darstellung ein zweites Ausführungsbeispiel einer erfindungsgemäßen Schaltungsanordnung;
- Fig. 3: in schematischer Darstellung ein drittes Ausführungsbeispiel einer erfindungsgemäßen Schaltungsanordnung; und
- Fig. 4: in schematischer Darstellung ein viertes Ausführungsbeispiel einer erfindungsgemäßen Schaltungsanordnung.

### Bevorzugte Ausführung der Erfindung

In den nachfolgenden Ausführungen werden für gleiche und gleich wirkende Bauelemente dieselben Bezugszeichen verwendet. Diese werden der Übersichtlichkeit halber nur einmal eingeführt.

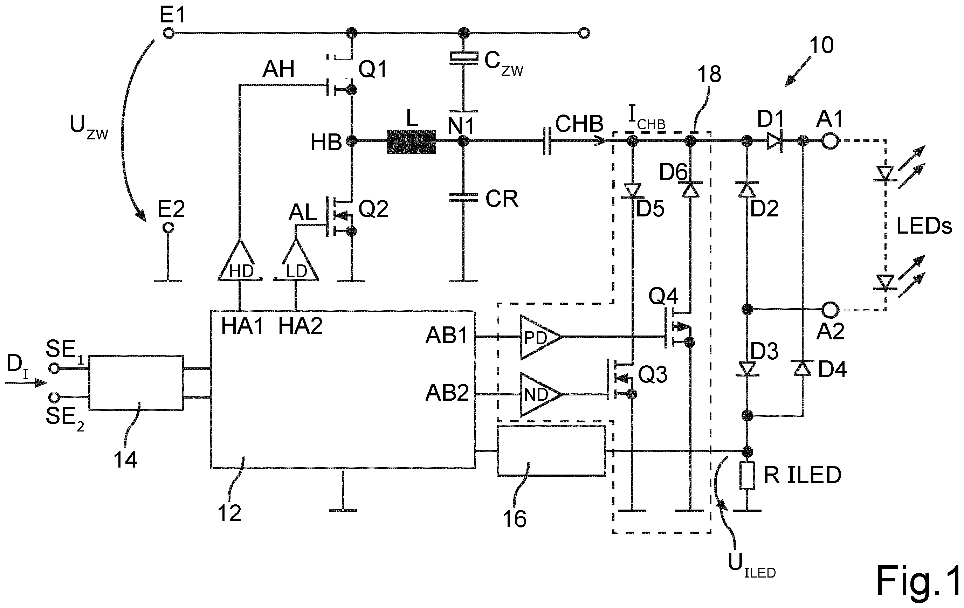

Fig. 1 zeigt in schematischer Darstellung ein erstes Ausführungsbeispiel einer erfindungsgemäßen Schaltungsanordnung. Diese weist einen Eingang mit einem ersten E1 und einem zweiten Eingangsanschluss E2 zum Koppeln mit einer Versorgungsgleichspannung auf, die vorliegend die so genannte Zwischenkreisspannung U_{Zw} darstellt. Diese wird bevorzugt durch einen vorgeschalteten PFC-Controller aus einer Netzwechselspannung erzeugt, geregelt und liegt üblicherweise in der Größenordnung von 400 V Gleichspannung.

Zwischen die Eingangsanschlüsse E1, E2 ist zum Puffern der Zwischenkreisspannung U_{Zw} ein Zwischenkreiskondensator C_{Zw} gekoppelt. Die Schaltungsanordnung umfasst weiterhin einen ersten Q1 und einen zweiten Transistor Q2 in Halbbrückenanordnung, wobei die beiden Transistoren Q1, Q2 unter Ausbildung eines Halbbrückenmittelpunkts HB seriell zwischen den ersten und den zweiten Eingangsanschluss E1, E2 gekoppelt sind. Wie für den Fachmann offentlich könnte die vorliegende Erfindung auch mit einer Vollbrücke realisiert werden.

Die Schaltungsanordnung umfasst weiterhin einen Ausgang mit einem ersten und einem zweiten Ausgangsanschluss A1, A2 zum Anschließen mindestens einer LED. Zwischen den Halbbrückenmittelpunkt HB und den ersten Ausgangsanschluss A1 ist die Serienschaltung einer Drossel L, eines Halbbrückenkondensators CHB sowie eines Gleichrichters 10 gekoppelt, wobei letzterer die Dioden D1, D2, D3 und D4 umfasst. Da der Widerstand der Drossel L mit zunehmender Frequenz ansteigt, lässt sich der Strom I_{CHB} zum Dimmen der LEDs durch Frequenzerhöhung reduzieren.

Der Knoten N1, an dem die Drossel L mit dem Halbbrückenkondensator CHB gekoppelt ist, ist über einen Resonanzkondensator CR mit dem Bezugspotential verbunden. Eine Ansteuervorrichtung 12 ist ausgelegt über einen ersten Ausgang HA1 den Transistor Q1 anzusteuern und über einen zweiten Ausgang HA2 den Transistor Q2. Zwischen den Ausgang HA1 und die Steuerelektrode des Transistors Q1 ist ein High-Side-Treiber HD, der zusätzlich als levelshifter dient, gekoppelt, während zwischen den Ausgang HA2 und die Steuerelektrode des Transistors Q2 ein Low-Side-Treiber LD gekoppelt ist.

Die Ansteuervorrichtung 12 ist mit einer Schnittstelle 14 gekoppelt, über deren Eingänge SE1, SE2 der Ansteuervorrichtung 12 eine Dimminformation D_{I} zuführbar ist. Die Schnittstelle 14 kann insbesondere eine DALI-Schnittstelle beziehungsweise eine so genannte 1-10 Volt-Schnittstelle darstellen. Zwischen den Gleichrichter 10 und das Bezugpotential ist ein Shunt-Widerstand R_{ILED} gekoppelt, wobei die über dem Widerstand R_{ILED} abfallende Spannung U_{ILED} über eine Anpassschaltung 16 an die Ansteuervorrichtung 12 gekoppelt wird. Die Anpassschaltung 16 ist ausgelegt, aus der Spannung U_{ILED} ein dem Strom durch die LEDs proportionales Messsignal zu erzeugen, das von der Ansteuervorrichtung 12 verarbeitet werden kann.

Die Ansteuervorrichtung 12 ist bevorzugt als Mikrocontroller ausgeführt. Wie für den Fachmann offensichtlich, ist der den Kondensator CHB durchfließende Strom I_{CHB} ein Wechselstrom, das heißt er setzt sich aus positiven und negativen Halbwellen zusammen.

Die Ansteuersignale AH, AL für die Transistoren Q1, Q2 sind Rechtecksignale bei einer variierbaren Frequenz f_{HB}. Die Ansteuervorrichtung 12 ist nunmehr ausgelegt, bei zunehmender Dimmung, das heißt bei zunehmender Verringerung des von den LEDs abzugebenden Lichts, die Frequenz f_{HB} bis zu einem vorgebbaren Schwellwert SW zu erhöhen. Die Frequenz f_{HBmax} am Schwellwert SW stellt einen Frequenzmaximalwert dar, der erfindungsgemäß nicht überschritten wird. Der Schwellwert SW liegt bevorzugt zwischen 20 und 30 % des maximal von den LEDs abgebbaren Lichts. Die Frequenz f_{HB} liegt im ungedimmten Zustand bei beispielsweise 40 kHz. Die Frequenz f_{HBmax} am Dimmschwellwert SW liegt beispielsweise zwischen 150 und 200 kHz.

Zur Einstellung von Dimmwerten, die unterhalb des Dimmschwellwerts SW liegen, das heißt bei weiter zunehmender Dimmung, wird wie folgt verfahren: Zu diesem Zweck verfügt die Schaltungsanordnung über eine erste Serienschaltung umfassend eine Diode D5 und einen Transistor Q3 sowie eine dazu parallel gekoppelte zweite Serienschaltung, die eine Diode D6 und einen Transistor Q4 umfasst. Wie deutlich zu erkennen ist, sind die Dioden D5 und D6 unterschiedlich orientiert, während die Transistoren Q3 und Q4 komplementär ausgeführt sind. Die Ansteuervorrichtung 12 verfügt über zwei weitere Ausgänge, und zwar einen Ausgang AB1, der über einen Treiber PD mit der Steuerelektrode des Transistors Q4 gekoppelt ist, sowie einen Ausgang AB2, der über einen Treiber ND mit der Steuerelektrode des Transistors Q3 gekoppelt ist. Die Serienschaltungen D5 und Q3 einerseits sowie D6 und Q4 andererseits bilden eine Kurzschlussvorrichtung 18.

Wird zu dem Zeitpunkt, zu dem der Strom I_{CHB} eine positive Halbwelle aufweist, der Transistor Q3 mittels des Ausgangssignals AB2 leitend geschaltet, wird die entsprechende Halbwelle kurzgeschlossen und fehlt daher im Eingangssignal des Gleichrichters 10. Dadurch, dass die Diode D6 entgegengesetzt orientiert ist wie die Diode D5, beeinflusst die Serienschaltung aus der Diode D6 und dem Transistor Q4 diese Phase nicht. Wird umgekehrt zu einem Zeitpunkt, zu dem der Strom I_{CHB} eine negative Halbwelle aufweist, der Transistor Q4 mittels des Ausgangssignals AB1 leitend geschaltet, so wird die negative Halbwelle kurzgeschlossen und fehlt im an den Gleichrichter 10 bereitgestellten Ausgangssignal. Die Serienschaltung aus der Diode D5 und dem Transistor Q3 beeinflusst dann diese Phase nicht.

Um beispielsweise jede zehnte positive und jede zehnte negative Halbwelle durch entsprechende Ansteuerung der Transistoren Q3 und Q4 mittels der Ausgangssignale AB1 und AB2 kurzzuschließen, das heißt auszublenden, werden demnach die Transistoren Q3 und Q4 mit einem Signal angesteuert, das eine Frequenz von 20 kHz aufweist. Diese Frequenz liegt über dem hörbaren Bereich und führt daher zu keinen akustischen Störungen. Zum weiteren Dimmen können beispielsweise anstelle des Ausblendens jeder zehnten Halbwelle, beispielsweise n hintereinanderliegende Halbwellen kurzgeschlossen werden, wobei n zwischen 1 und 10 liegt. Wie für den Fachmann offensichtlich, kann durch Kurzschließen jeder n-ten Halbwelle ebenfalls der Dimmgrad variiert werden. Werden beispielsweise an den Ausgängen AB1, AB2 Signale mit 40 kHz bereitgestellt, dann kann bei einer f_{HBmax} von 200 kHz jede fünfte Schwingung ausgeblendet werden. Feine Abstufungen der Dimmgrade können erreicht werden, indem zwischen einzelnen 20 kHz-Zyklen die Anzahl der ausgeschnittenen Stromhalbwellen nach einem vorzugebenden Schema variiert werden.

Während die Schaltungsanordnung prinzipiell mit einer Serienschaltung eines Schalters und einer Diode auskommen würde, beispielsweise der Serienschaltung D5 und Q3 oder der Serienschaltung D6 und Q4, so lassen sich besonders fein einstellbare Dimmgrade erzielen, wenn beide dieser Serienschaltungen, wie in Fig. 1 gezeigt, vorgesehen sind.

Besonders vorteilhaft an der in Fig. 1 gezeigten Ausführungsform ist der Umstand, dass eine Ansteuerung der Schalter Q3, Q4 bezogen auf internes Ground möglich ist. Damit lassen sich die Treiber PD und ND besonders einfach und kostengünstig realisieren. Ebenfalls von Vorteil ist, dass die Schalter Q3, Q4 immer im stromlosen Zustand geschaltet werden können, das heißt, wenn sich die zugehörige Diode in Sperrrichtung befindet. Damit wird die Steuerung einfach und zeitunkritisch. Dies resultiert in einer besonders niedrigen Verlustleitung sowie in der Vermeidung von EMV-Störungen.

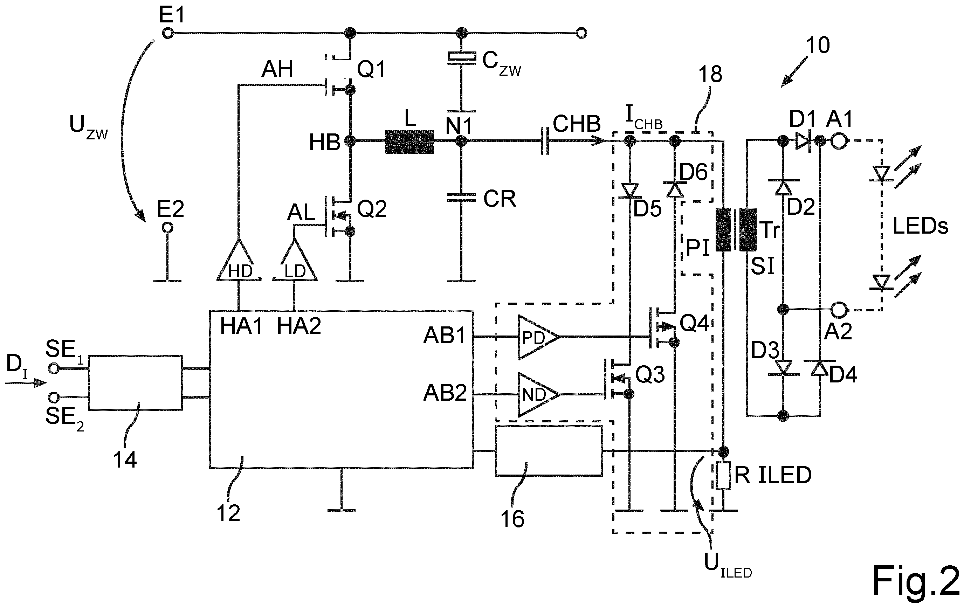

Die in Fig. 2 dargestellte Ausführungsform unterscheidet sich von der in Fig. 1 dargestellten dadurch, dass der Ausgangskreis durch Verwendung eines Transformators Tr galvanisch vom Eingangskreis getrennt ist. Dabei ist eine Serienschaltung, die die Primärinduktivität PI und den Shunt-Widerstand R_{ILED} umfasst, parallel zu den Serienschaltungen D5 und Q3 einerseits sowie D6 und Q4 andererseits gekoppelt. Die Sekundärinduktivität SI ist mit dem Eingang des Gleichrichters 10 gekoppelt. Dadurch, dass bei der Ausführungsform gemäß Fig. 2 ein Transformator Tr verwendet wird, ist darauf zu achten, dass abwechselnd positive und negative Halbwellen kurzgeschlossen werden, damit der Transformator nicht sättigt. Mit anderen Worten bedeutet dies, dass der Mittelwert des Integrals des Stroms der Primärwicklung PI null sein muss. Demnach sind beide Serienschaltungen, d.h. Q3 und D5 einerseits sowie Q4 und D6 andererseits, vorzusehen.

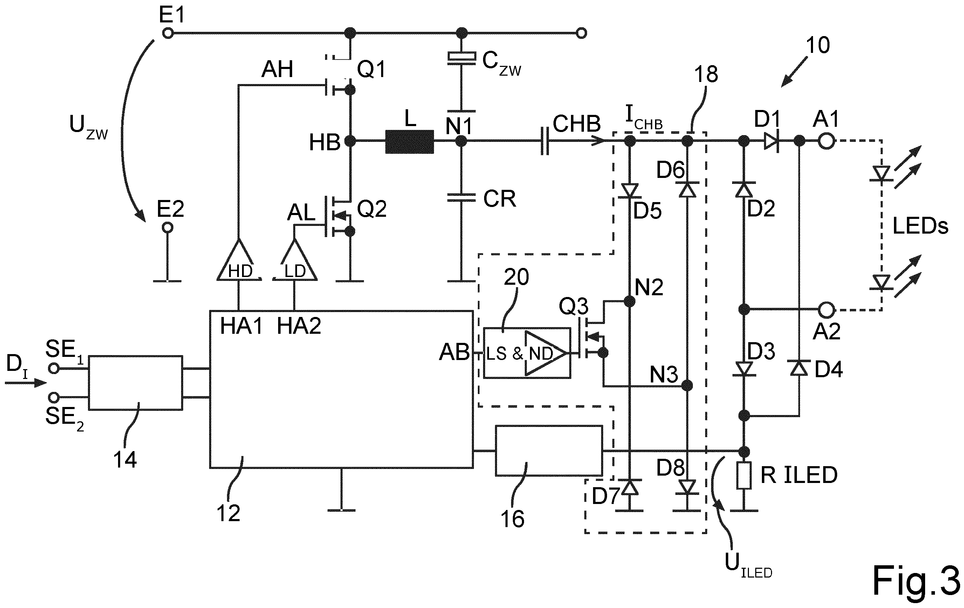

Bei der in Fig. 3 dargestellten Ausführungsform ist im Vergleich zu der in Fig. 1 dargestellten Ausführungsform zum Kurzschließen von Halbwellen des Stroms I_{CHB} lediglich ein Schalter vorgesehen, nämlich der Schalter Q3. Allerdings sind zwei weitere Dioden D7 und D8 hinzugekommen. Wie der Fig. 3 zu entnehmen ist, ist die Diode D7 antiseriell zur Diode D5 gekoppelt, während die Diode D8 antiseriell zur Diode D6 gekoppelt ist. Der Kopplungspunkt der Diode D5 mit der Diode D7 ist mit N2 bezeichnet, während der Kopplungspunkt der Diode D6 mit der Diode D8 mit N3 bezeichnet ist. Während die Steuerelektrode des Schalters Q3 über einen Treiber 20 mit dem Ausgang AB der Ansteuervorrichtung 12 gekoppelt ist, ist die Arbeits- bzw. Bezugselektrode des Schalters Q3 mit dem Knoten N2 bzw. dem Knoten N3 gekoppelt. Der Treiber 20 dient ebenfalls auch als level shifter für den Schalter Q3. Der level shifter ist deshalb nötig, da die Schalteranschlüsse im Potential variieren. Im Vergleich zu den Ausführungsformen gemäß Fig. 1 und Fig. 2 ist für die Ausführungsform gemäß Fig. 3 das Ansteuersignal aufwendiger und genauer zu erzeugen, da der Schalter Q3 nur eingeschaltet werden sollte, wenn der Kondensator CR gerade entladen ist. Andernfalls würden Schaltverluste und erhöhte Funkstörungen entstehen. Allerdings läßt sich, wie ausgeführt, ein Schalter einsparen.

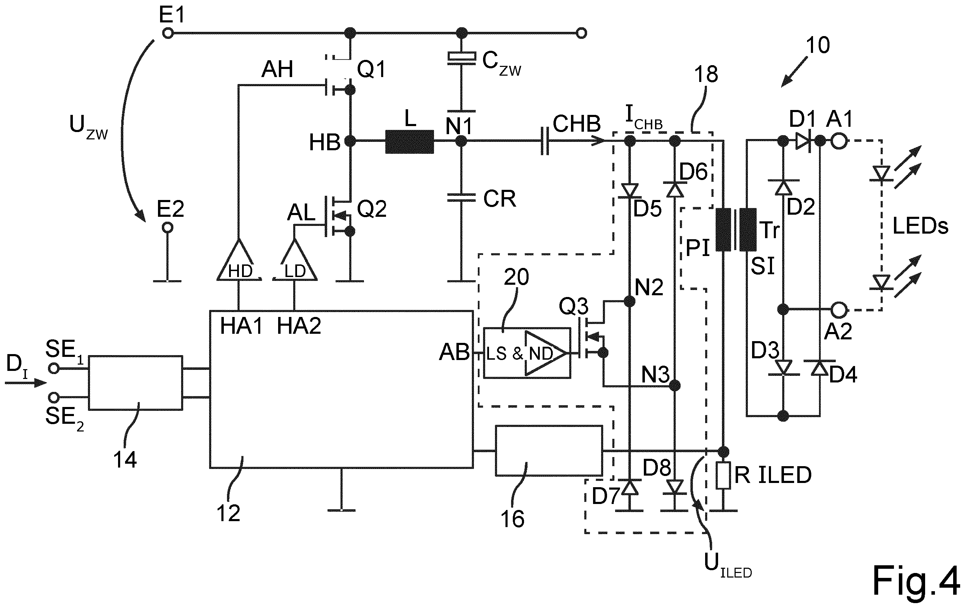

Fig. 4 zeigt eine Modifikation des Ausführungsbeispiels von Fig. 3, wobei wiederum ein Transformator Tr, vergleiche Fig. 2, zur galvanischen Trennung von Ein- und Ausgangskreis eingesetzt ist. Hierbei ist wieder darauf zu achten, dass abwechselnd positive und negative Halbwellen ausgeschlossen werden, um eine Sättigung der Primärinduktivität PI zu vermeiden.

## Patentansprüche

1. Schaltungsanordnung zum Betreiben und Dimmen mindestens einer LED umfassend:
- einen Eingang mit einem ersten (E1) und einem zweiten Eingangsanschluss (E2) zum Koppeln mit einer Versorgungsgleichspannung (U_{Zw}) ;
- zumindest einen ersten (Q1) und einen zweiten elektronischen Schalter (Q2) in Brückenanordnung, wobei der erste (Q1) und der zweite elektronische Schalter (Q2) unter Ausbildung eines Brückenmittelpunkts (HB) seriell zwischen den ersten (E1) und den zweiten Eingangsanschluss (E2) gekoppelt sind;
- einen Ausgang mit einem ersten (A1) und einem zweiten Ausgangsanschluss (A2) zum Anschließen der mindestens einen LED;
- eine Drossel (L);
- einen Gleichrichter (10) mit einem Gleichrichtereingang und einem Gleichrichterausgang, wobei die Drossel (L) zwischen den Brückenmittelpunkt (HB) und den Gleichrichtereingang gekoppelt ist, wobei der Gleichrichterausgang mit dem Ausgang (A1, A2) der Schaltungsanordnung gekoppelt ist; und
- eine Ansteuervorrichtung (12) mit mindestens einem ersten (HA1) und einem zweiten Ausgang (HA2) zur Zuführung von entsprechenden Ansteuersignalen (AH, AL) an den ersten (Q1) und den zweiten elektronischen Schalter (Q2), wobei die Ansteuersignale (AH, AL) eine vorgebbare Frequenz (f_{HB}) aufweisen, wobei die Ansteuervorrichtung (12) einen Eingang (SE1, SE2) zum Zuführen einer Dimminformation (DI) aufweist, wobei die Ansteuervorrichtung (12) ausgelegt ist, zum Dimmen der mindestens einen LED bei zunehmender Dimmung die Frequenz (f_{HB}) der Ansteuersignale (AH, AL) zu erhöhen, wobei eine zunehmende Dimmung einen abnehmenden Dimmwert und damit eine Abnahme des emittierten Lichts bezeichnet;
**dadurch gekennzeichnet,**
**dass** die Ansteuervorrichtung (12) ausgelegt ist, zum Dimmen der mindestens einen LED die Frequenz (f_{HB}) der entsprechenden Ansteuersignale (AH, AL) so weit zu erhöhen, bis der abnehmende Dimmwert einen vorgebbaren Dimmschwellwert (SW) erreicht, wobei die Frequenz (f_{HB}) der Ansteuersignale (AH, AL) zur Einstellung des Dimmwerts, der dem Dimmschwellwert (SW) entspricht, einen Frequenzmaximalwert (f_{HBmax}) darstellt,
wobei die Schaltungsanordnung weiterhin eine Kurzschlussvorrichtung (18) zum Ausblenden eines Ausgangssignals der Brückenanordnung während vorgebbarer Zeiträume mit mindestens einem Eingang und mindestens einem Ausgang umfasst,
wobei der mindestens eine Eingang der Kurzschlussvorrichtung (18) mit mindestens einem weiteren Ausgang (AB1, AB2; AB) der Ansteuervorrichtung (12) gekoppelt ist, wobei der mindestens eine Ausgang der Kurzschlussvorrichtung (18) mit dem Gleichrichtereingang gekoppelt ist,
wobei die Ansteuervorrichtung (12) weiterhin ausgelegt ist, zur Einstellung irgendeines Dimmwerts, der kleiner ist als der vorgebbare Dimmschwellwert (SW), die Frequenz der Ansteuersignale auf den Frequenzmaximalwert einzustellen und die Kurzschlussvorrichtung (18) während der vorgebbaren Zeiträume zu aktivieren,
und wobei die vorgebbaren Zeiträume einem ganzzahligen Vielfachen einzelner Halbwellen des Ausgangssignals der Brückenanordnung entsprechen.

2. Schaltungsanordnung nach Anspruch 1,
**dadurch gekennzeichnet,**
**dass** die Kurzschlussvorrichtung (18) mindestens eine Serienschaltung einen elektronischen Schalter (Q3, Q4) und mindestens eine Diode (D5, D6, D7, D8) umfasst, wobei der Eingang des elektronischen Schalters mit dem weiteren Ausgang (AB) der Ansteuervorrichtung (12) gekoppelt ist, wobei die mindestens eine Serienschaltung zwischen den Ausgang der Kurzschlussvorrichtung (18) und ein Bezugspotential gekoppelt ist.

3. Schaltungsanordnung nach Anspruch 2,
**dadurch gekennzeichnet,**
**dass** die Kurzschlussvorrichtung (18) ergänzend zur ersten der mindestens einen Serienschaltung umfassend den ersten elektronischen Schalter (Q3) und die erste Diode (D5) eine zweite der mindestens einen Serienschaltung umfassend den zweiten elektronischen Schalter (Q4) und die zweite Diode (D6) umfasst, wobei die erste (Q3, D5) und die zweite Serienschaltung (Q4, D6) parallel geschaltet sind, wobei die erste Diode (D5) und die zweite Diode (D6) mit unterschiedlicher Orientierung angeordnet sind.

4. Schaltungsanordnung nach Anspruch 2,
**dadurch gekennzeichnet,**
**dass** die Kurzschlussvorrichtung (18) ergänzend zum elektronischen Schalter (Q3, Q4) und der ersten Diode (D5) eine zweite (D7), eine dritte (D6) und eine vierte Diode (D8) umfasst,
wobei die erste und die zweite Diode unter Ausbildung eines ersten Kopplungspunkts mit zueinander orientierten Kathoden in Serie zwischen den Ausgang der Kurzschlussvorrichtung (18) und das Bezugspotential gekoppelt sind,
wobei die dritte und die vierte Diode unter Ausbildung eines zweiten Kopplungspunkts mit zueinander orientierten Anoden in Serie zwischen den Ausgang der Kurzschlussvorrichtung (18) und das Bezugspotential gekoppelt sind,
wobei die Arbeitselektrode des elektronischen Schalters (Q3, Q4) mit dem ersten Kopplungspunkt und die Bezugselektrode des elektronischen Schalters (Q3, Q4) mit dem zweiten Kopplungspunkt gekoppelt ist.

5. Schaltungsanordnung nach einem der vorhergehenden Ansprüche,
**dadurch gekennzeichnet,**
**dass** die Schaltungsanordnung weiterhin einen Transformator (Tr) umfasst, der zwischen die Drossel (L) und den Gleichrichter (10) gekoppelt ist.

6. Schaltungsanordnung nach einem der vorhergehenden Ansprüche,
**dadurch gekennzeichnet,**
**dass** sie eine Strommessvorrichtung (R_{ILED}), insbesondere einen Shunt-Widerstand, umfasst, die ausgelegt ist, einen Strom zu messen, der mit dem Strom durch die mindestens eine LED korreliert ist, wobei die Strommessvorrichtung (R_{ILED}) zur Regelung des Stroms durch die mindestens eine LED mit der Ansteuervorrichtung (12) gekoppelt ist.

7. Schaltungsanordnung nach einem der vorhergehenden Ansprüche,
**dadurch gekennzeichnet,**
**dass** die Schaltungsanordnung weiterhin einen Zwischenkreiskondensator (C_{Zw}) umfasst, der zwischen den ersten (E1) und den zweiten Eingangsanschluss (E2) gekoppelt ist.

8. Schaltungsanordnung nach einem der vorhergehenden Ansprüche,
**dadurch gekennzeichnet,**
**dass** die Schaltungsanordnung weiterhin einen Brückenkondensator (CHB) umfasst, der zwischen die Drossel (L) und den Gleichrichter (10) gekoppelt ist.

9. Schaltungsanordnung nach einem der vorhergehenden Ansprüche,
**dadurch gekennzeichnet,**
**dass** die Schaltungsanordnung weiterhin einen Resonanzkondensator (CR) umfasst, der zwischen den nicht mit dem Brückenmittelpunkt (HB) gekoppelten Anschluss der Drossel (L) und das Bezugspotential gekoppelt ist.

10. Verfahren zum Betreiben und Dimmen mindestens einer LED mittels einer Schaltungsanordnung gemäß Anspruch 1, wobei mittels der Ansteuervorrichtung (12) entsprechende Ansteuersignale (AH, AL) mit einer vorgebbaren Frequenz (f_{HB}) zum ersten und zum zweiten elektronischen Schalter zugeführt werden, wobei der Ansteuervorrichtung (12) über einen Eingang (SE1, SE2) eine Dimminformation (DI) zugeführt wird, wobei mittels der Ansteuervorrichtung (12) zum Dimmen der mindestens einen LED bei zunehmender Dimmung die Frequenz (f_{HB}) der Ansteuersignale (AH, AL) erhöht wird, wobei eine zunehmende Dimmung einen abnehmenden Dimmwert und damit eine Abnahme des emittierten Lichts bezeichnet, **dadurch gekennzeichnet,**
**dass** zum Dimmen der mindestens einen LED die Frequenz (f_{HB}) der entsprechenden Ansteuersignale (AH, AL) soweit erhöht wird, bis der abnehmende Dimmwert einen vorgebbaren Dimmschwellwert (SW) erreicht, wobei die Frequenz (f_{HB}) der Ansteuersignale (AH, AL) zur Einstellung des Dimmwerts, der dem Dimmschwellwert (SW) entspricht, einen Frequenzmaximalwert (f_{HBmax}) darstellt, und
wobei zur Einstellung irgendeines Dimmwerts, der kleiner ist als der vorgebbare Dimmschwellwert (SW) die Frequenz der Ansteuersignale auf den Frequenzmaximalwert eingestellt wird und ein Ausgangssignal der Brückenanordnung während vorgebbarer Zeiträume ausgeblendet wird,
wobei die vorgebbaren Zeiträume einem ganzzahligen Vielfachen einzelner Halbwellen des Ausgangssignals der Brückenanordnung entsprechen.

## Claims

1. Circuit arrangement for operating and dimming at least one LED comprising:
- an input having a first (E1) and a second input connection (E2) for coupling to a DC supply voltage (U_{Zw});
- at least one first (Q1) and one second electronic switch (Q2) in a bridge arrangement, wherein the first (Q1) and the second electronic switch (Q2) are coupled in series between the first (E1) and the second input connection (E2) so as to form a bridge centre point (HB);
- an output having a first (A1) and a second output connection (A2) for connecting the at least one LED;
- an inductor (L);
- a rectifier (10) having a rectifier input and a rectifier output, wherein the inductor (L) is coupled between the bridge centre point (HB) and the rectifier input, wherein the rectifier output is coupled to the output (A1, A2) of the circuit arrangement; and
- a drive apparatus (12) having at least one first (HA1) and one second output (HA2) for feeding corresponding drive signals (AH, AL) to the first (Q1) and the second electronic switch (Q2), wherein the drive signals (AH, AL) have a prescribable frequency (f_{HB}), wherein the drive apparatus (12) has an input (SE1, SE2) for feeding a piece of dimming information (DI), wherein the drive apparatus (12) is designed to increase the frequency (f_{HB}) of the drive signals (AH, AL) in order to dim the at least one LED with increasing dimming, wherein an increasing dimming denotes a decreasing dimming value and therefore a decrease in the emitted light;
**characterized in that**
the drive apparatus (12) is designed, in order to dim the at least one LED, to increase the frequency (f_{HB}) of the corresponding drive signals (AH, AL) until the decreasing dimming value reaches a prescribable dimming threshold value (SW), wherein the frequency (f_{HB}) of the drive signals (AH, AL) represents a maximum frequency value (f_{HBmax}) in order to set the dimming value, which corresponds to the dimming threshold value (SW),
wherein the circuit arrangement furthermore comprises a short-circuit apparatus (18) for masking out an output signal of the bridge arrangement during prescribable periods having at least one input and at least one output,
wherein the at least one input of the short-circuit apparatus (18) is coupled to at least one further output (AB1, AB2; AB) of the drive apparatus (12), wherein the at least one output of the short-circuit apparatus (18) is coupled to the rectifier input,
wherein the drive apparatus (12) is furthermore designed, in order to set any dimming value that is lower than the prescribable dimming threshold value (SW), to set the frequency of the drive signals to the maximum frequency value and to activate the short-circuit apparatus (18) during the prescribable periods,
and wherein the prescribable periods correspond to an integer multiple of individual half-waves of the output signal of the bridge arrangement.

2. Circuit arrangement according to Claim 1,
**characterized in that**
the short-circuit apparatus (18) comprises at least one series circuit, an electronic switch (Q3, Q4) and at least one diode (D5, D6, D7, D8), wherein the input of the electronic switch is coupled to the further output (AB) of the drive apparatus (12), wherein the at least one series circuit is coupled between the output of the short-circuit apparatus (18) and a reference-ground potential.

3. Circuit arrangement according to Claim 2,
**characterized in that**
the short-circuit apparatus (18) comprises, in addition to the first of the at least one series circuit comprising the first electronic switch (Q3) and the first diode (D5), a second of the at least one series circuit comprising the second electronic switch (Q4) and the second diode (D6), wherein the first (Q3, D5) and the second series circuit (Q4, D6) are connected in parallel, wherein the first diode (D5) and the second diode (D6) are arranged with a different orientation.

4. Circuit arrangement according to Claim 2,
**characterized in that**
the short-circuit apparatus (18) comprises, in addition to the electronic switch (Q3, Q4) and the first diode (D5), a second (D7), a third (D6) and a fourth diode (D8),
wherein the first and the second diode are coupled in series between the output of the short-circuit apparatus (18) and the reference-ground potential to form a first coupling point with cathodes oriented towards one another,
wherein the third and the fourth diode are coupled in series between the output of the short-circuit apparatus (18) and the reference-ground potential so as to form a second coupling point with anodes oriented towards one another,
wherein the operating electrode of the electronic switch (Q3, Q4) is coupled to the first coupling point and the reference-ground electrode of the electronic switch (Q3, Q4) is coupled to the second coupling point.

5. Circuit arrangement according to one of the preceding claims,
**characterized in that**
the circuit arrangement furthermore comprises a transformer (Tr), which is coupled between the inductor (L) and the rectifier (10).

6. Circuit arrangement according to one of the preceding claims,
**characterized in that**
said circuit arrangement comprises a current measurement apparatus (R_{ILED}), in particular a shunt resistor, which is designed to measure a current that is correlated to the current through the at least one LED, wherein the current measurement apparatus (R_{ILED}) is coupled to the drive apparatus (12) in order to regulate the current through the at least one LED.

7. Circuit arrangement according to one of the preceding claims,
**characterized in that**
the circuit arrangement furthermore comprises an intermediate circuit capacitor (C_{Zw}), which is coupled between the first (E1) and the second input connection (E2).

8. Circuit arrangement according to one of the preceding claims,
**characterized in that**
the circuit arrangement furthermore comprises a bridge capacitor (CHB), which is coupled between the inductor (L) and the rectifier (10).

9. Circuit arrangement according to one of the preceding claims,
**characterized in that**
the circuit arrangement furthermore comprises a resonant capacitor (CR), which is coupled between the connection of the inductor (L), which connection is not coupled to the bridge centre point (HB), and the reference-ground potential.

10. Method for operating and dimming at least one LED by means of a circuit arrangement according to Claim 1, wherein corresponding drive signals (AH, AL) at a prescribable frequency (f_{HB}) are fed by means of the drive apparatus (12) to the first and to the second electronic switch, wherein a piece of dimming information (DI) is fed to the drive apparatus (12) via an input (SE1, SE2), wherein the frequency (f_{HB}) of the drive signals (AH, AL) is increased by means of the drive apparatus (12) in order to dim the at least one LED with increasing dimming, wherein an increasing dimming denotes a decreasing dimming value and therefore a decrease in the emitted light,
**characterized in that**
in order to dim the at least one LED, the frequency (f_{HB}) of the corresponding drive signals (AH, AL) is increased until the decreasing dimming value reaches a prescribable dimming threshold value (SW), wherein the frequency (f_{HB}) of the drive signals (AH, AL) represents a maximum frequency value (f_{HBmax}) in order to set the dimming value, which corresponds to the dimming threshold value (SW), and
wherein, in order to set any dimming value that is lower than the prescribable dimming threshold value (SW), the frequency of the drive signals is set to the maximum frequency value and an output signal of the bridge arrangement is masked out during prescribable periods,
wherein the prescribable periods correspond to an integer multiple of individual half-waves of the output signal of the bridge arrangement.

## Revendications

1. Circuit électrique pour faire fonctionner et varier au moins une DEL, comprenant :
- une entrée avec une première (E1) et une deuxième borne d'entrée (E2) pour couplage à une tension continue d'alimentation (U_{zw});
- au moins un premier (Q1) et un deuxième commutateur électronique (Q2) montés en pont, le premier (Q1) et le deuxième commutateur électronique (Q2) étant couplés en série entre la première (E1) et la deuxième borne d'entrée (E2) avec formation d'un point central de pont (HB);
- une sortie avec une première (A1) et une deuxième borne de sortie (A2) pour connecter l'au moins une DEL ;
- une self (L) ;
- un redresseur (10) avec une entrée de redresseur et une sortie de redresseur, la self (L) étant couplée entre le point central de pont (HB) et l'entrée de redresseur, la sortie de redresseur étant couplée à la sortie (A1, A2) du circuit ; et
- un dispositif de commande (12) avec au moins une première (HA1) et une deuxième sortie (HA2) pour amener des signaux de commande correspondants (AH, AL) au premier (Q1) et au deuxième commutateur électronique (Q2), les signaux de commande (AH, AL) présentant une fréquence prédéterminable (f_{HB}), le dispositif de commande (12) comportant une entrée (SE1, SE2) pour amener une information de variation (DI), le dispositif de commande (12) étant conçu pour augmenter la fréquence (f_{HB}) des signaux de commande (AH, AL) pour faire varier l'au moins une DEL dans le cas d'une variation croissante, une variation croissante désignant une valeur de variation décroissante et donc une diminution de la lumière émise ;
**caractérisé en ce que**
le dispositif de commande (12) est conçu pour augmenter la fréquence (f_{HB}) des signaux de commande correspondants (AH, AL), pour faire varier l'au moins une DEL, jusqu'à ce que la valeur de variation décroissante atteigne une valeur seuil de variation prédéterminable (SW), la fréquence (f_{HB}) des signaux de commande (AH, AL) pour le réglage de la valeur de variation qui correspond à la valeur seuil de variation (SW) représentant une valeur maximale de fréquence (f_{HBmax}),
le circuit comprenant en outre un dispositif de court-circuit (18) pour occulter un signal de sortie du montage en pont pendant des laps de temps prédéterminables avec au moins une entrée et au moins une sortie,
l'au moins une entrée du dispositif de court-circuit (18) étant couplée à au moins une autre sortie (AB1, AB2 ; AB) du dispositif de commande (12),
l'au moins une sortie du dispositif de court-circuit (18) étant couplée à l'entrée de redresseur,
le dispositif de commande (12) étant en outre conçu pour régler, afin de régler une quelconque valeur de variation qui est inférieure à la valeur seuil de variation prédéterminable (SW), la fréquence des signaux de commande sur la valeur maximale de fréquence et activer le dispositif de court-circuit (18) pendant les laps de temps prédéterminables,
et les laps de temps prédéterminables correspondant à un multiple entier de demi-ondes distinctes du signal de sortie du montage en pont.

2. Circuit selon la revendication 1, **caractérisé en ce que** le dispositif de court-circuit (18) comprend au moins un montage en série, un commutateur électronique (Q3, Q4) et au moins une diode (D5, D6, D7, D8), l'entrée du commutateur électronique étant couplée à l'autre sortie (AB) du dispositif de commande (12), l'au moins un montage en série étant couplé entre la sortie du dispositif de court-circuit (18) et un potentiel de référence.

3. Circuit selon la revendication 2, **caractérisé en ce que** le dispositif de court-circuit (18), complémentairement au premier de l'au moins un montage en série comprenant le premier commutateur électronique (Q3) et la première diode (D5), comprend un deuxième de l'au moins un montage en série comprenant le deuxième commutateur électronique(Q4) et la deuxième diode (D6), le premier (Q3, D5) et le deuxième montage en série (Q4, D6) étant montés en parallèle, la première diode (D5) et la deuxième diode (D6) étant agencées avec une orientation différente.

4. Circuit selon la revendication 2, **caractérisé en ce que** le dispositif de court-circuit (18), complémentairement au commutateur électronique (Q3, Q4) et à la première diode (D5), comprend une deuxième (D7), une troisième (D6) et une quatrième diode (D8),
la première et la deuxième diode étant couplées en formant un premier point de couplage avec des cathodes orientées l'une vers l'autre en série entre la sortie du dispositif de court-circuit (18) et le potentiel de référence,
la troisième et la quatrième diode étant couplées en formant un deuxième point de couplage avec des anodes orientées l'une vers l'autre en série entre la sortie du dispositif de court-circuit (18) et le potentiel de référence,
l'électrode de travail du commutateur électronique (Q3, Q4) étant couplée au premier point de couplage et l'électrode de référence du commutateur électronique (Q3, Q4), au deuxième point de couplage.

5. Circuit selon l'une des revendications précédentes, **caractérisé en ce que** le circuit comprend en outre un transformateur (Tr) qui est couplé entre la self (L) et le redresseur (10).

6. Circuit selon l'une des revendications précédentes, **caractérisé en ce qu'**il comprend un dispositif de mesure de courant (R_{ILED}), et plus particulièrement une résistance de shunt, qui est conçu pour mesurer un courant qui est corrélé avec le courant passant par l'au moins une DEL, le dispositif de mesure de courant (R_{ILED}) étant, pour le réglage du courant passant par l'au moins une DEL, couplé au dispositif de commande (12).

7. Circuit selon l'une des revendications précédentes, **caractérisé en ce que** le circuit comprend en outre un condensateur de circuit intermédiaire (C_{Zw}) qui est couplé entre la première (E1) et la deuxième borne d'entrée (E2).

8. Circuit selon l'une des revendications précédentes, **caractérisé en ce que** le circuit comprend en outre un condensateur en pont (CHB) qui est couplé entre la self (L) et le redresseur (10).

9. Circuit selon l'une des revendications précédentes, **caractérisé en ce que** le circuit comprend en outre un condensateur de résonance (CR) qui est couplé entre la borne de la self (L) non couplée au point central de pont (HB) et le potentiel de référence.

10. Procédé pour faire fonctionner et varier au moins une DEL au moyen d'un circuit selon la revendication 1, des signaux de commande correspondants (AH, AL) étant amenés avec une fréquence prédéterminable (f_{HB}) au premier et au deuxième commutateur électronique au moyen du dispositif de commande (12), une information de variation (DI) étant amenée au dispositif de commande (12) via une entrée (SE1, SE2), la fréquence (f_{HB}) des signaux de commande (AH, AL) étant augmentée au moyen du dispositif de commande (12) pour faire varier l'au moins une DEL dans le cas d'une variation croissante, une variation croissante désignant une valeur de variation décroissante, et donc une diminution de la lumière émise,
**caractérisé en ce que**,
pour faire varier l'au moins une DEL, la fréquence (f_{HB}) des signaux de commande correspondants (AH, AL) est augmentée jusqu'à ce que la valeur de variation décroissante atteigne une valeur seuil de variation prédéterminable (SW), la fréquence (f_{HB}) des signaux de commande (AH, AL) pour le réglage de la valeur de variation qui correspond à la valeur seuil de variation (SW) représentant une valeur maximale de fréquence (f_{HBmax}) et,
pour le réglage d'une quelconque valeur de variation qui est inférieure à la valeur seuil de variation prédéterminable (SW), la fréquence des signaux de commande étant réglée sur la valeur maximale de fréquence et un signal de sortie du montage en pont étant occulté pendant des laps de temps prédéterminables,
les laps de temps prédéterminables correspondant à un multiple entier de demi-ondes distinctes du signal de sortie du montage en pont.
